# EUROPÄISCHE PATENTSCHRIFT

(11) **EP 2 521 610 B1**
(45) Veröffentlichungstag und Bekanntmachung des Hinweises auf die Patenterteilung: **10.07.2013**
(21) Anmeldenummer: 10800945.7
(22) Anmeldetag: 28.12.2010
(51) Int. Cl.: B01F 7/20, B01F 15/00, F16C 17/08, F16C 19/12, F16C 23/02, F16C 23/06

(54) **VERTIKALRÜHRWERK FÜR IN EINEM KLÄRBECKEN AUFGENOMMENES ABWASSER**
VERTICAL AGITATOR FOR WASTEWATER RECEIVED IN A SEDIMENTATION TANK
MÉLANGEUR VERTICAL POUR EAUX USÉES COLLECTÉES DANS UN BASSIN DE DÉCANTATION

(30) Priorität: 07.01.2010 DE 102010000730
(43) Veröffentlichungstag der Anmeldung: 14.11.2012
(73) Patentinhaber: INVENT Umwelt- und Verfahrenstechnik AG, 91058 Erlangen (DE)
(72) Erfinder: HÖFKEN, Marcus, 91054 Erlangen (DE)
(74) Vertreter: Gassner, Wolfgang
(86) Internationale Anmeldenummer: PCT/EP2010/070804
(87) Internationale Veröffentlichungsnummer: WO 2011/083063

(56) Entgegenhaltungen:
- WO-A1-03/095081
- DE-A1-102005 049 373
- DE-A1-102007 034 463
- DE-U1-202006 020 195
- US-A1- 2002 176 322

## Beschreibung

Die Erfindung betrifft eine Anordnung nach dem Oberbegriff des Anspruchs 1.

Ein solches Vertikalrührwerk ist beispielsweise aus der WO 03/095081 bekannt. Bei dem bekannten Vertikalrührwerk ist an einem turmartigen Gestell oberhalb eines Beckenbodens ein Antrieb angebracht. Vom Antrieb erstreckt sich vertikal eine Antriebswelle, welche mit einem hyperboloidartigen Rührwerkzeug verbunden ist. Von einer Unterseite des Rührwerkzeugs erstreckt sich in Richtung des Beckenbodens ein Wellenabschnitt, dessen freies Ende in einem Fanglager aufgenommen ist. Das Fanglager ist in einer am Beckenboden abgestützten Haltevorrichtung gehalten, welche Bestandteil des turmartigen Gestells ist. Zur Aufnahme des Fanglagers ist eine Aufnahmeeinrichtung vorgesehen, welche üblicherweise eine an einer Platte montierte Buchse umfasst. Die Buchse umgreift das Fanglager und wird mittels der Platte an der Haltevorrichtung befestigt.

Bei dem bekannten Vertikalrührwerk ist die Haltevorrichtung Bestandteil eines komplexen turmartigen Gestells. Ein solches turmartiges Gestell eignet sich gut für Anwendungen, bei denen lediglich ein einziges Vertikalrührwerk pro Klärbecken vorgesehen ist. Insbesondere bei großen Klärbecken kommen dagegen mehrere Vertikalrührwerke zum Einsatz. In diesem Fall sind die Antriebe der Vertikalrührwerke üblicherweise an einer das Becken überspannenden Brücke vorgesehen. Zur Montage solcher Vertikalrührwerke wird zunächst die Antriebswelle am Antrieb angebracht. Sodann wird der Antrieb samt Antriebswelle an der Brücke befestigt, so dass die Antriebswelle in Richtung des Beckenbodens frei hängt. Anschließend wird lotrecht unterhalb der Antriebswelle eine Haltevorrichtung zum Halten des Fanglagers am Beckenboden befestigt. Dann wird der Antrieb wieder gelöst und gemeinsam mit der Antriebswelle angehoben. Anschließend wird der hyperboloidartige Rührkörper mit seinem Wellenabschnitt in das in der Haltevorrichtung gehaltene Fanglager eingeführt, wobei der Rührkörper in einer angehobenen Position gehalten werden muss. Daraufhin werden der Antrieb und die daran angebrachte Antriebswelle abgesenkt. Der Antrieb wird wieder an der Brücke befestigt; die Antriebswelle wird am Rührkörper befestigt. Das herkömmliche Montageverfahren ist umständlich und zeitaufwändig. Es kann nicht immer sichergestellt werden, dass der Antrieb bei der endgültigen Montage korrekt zentriert bezüglich des Fanglagers ausgerichtet ist.

Aufgabe der Erfindung ist es, die Nachteile nach dem Stand der Technik zu beseitigen. Es soll insbesondere ein in einem Klärbecken möglichst schnell und einfach montierbares Vertikalrührwerk angegeben werden. Nach einem weiteren Ziel der Erfindung soll ferner ein möglichst einfach und schnell durchführbares Verfahren zur Montage des Vertikalrührwerks im Klärbecken angegeben werden.

Diese Aufgabe wird durch die Merkmale der Ansprüche 1 und 7 gelöst. Zweckmäßige Ausgestaltungen der Erfindung ergeben sich aus den Merkmalen der Ansprüche 2 bis 6 und 8.

Nach Maßgabe der Erfindung ist vorgesehen, dass der Aufnahmeabschnitt eine sich in eine im Wesentlichen horizontale Richtung öffnende Ausnehmung zum seitlichen Einführen des Wellenabschnitts aufweist. Das ermöglicht eine erhebliche Vereinfachung der Montage des Vertikalrührwerks. Es ist insbesondere nicht mehr erforderlich, den Antrieb bei der Montage mehrfach zu befestigen. Es kann außerdem eine inkorrekte Justierung der Antriebswelle bezüglich des Fanglagers vermieden werden.

Nach einer vorteilhaften Ausgestaltung weist die Aufnahmeeinrichtung eine an einer Platte angebrachte Buchse zur Aufnahme des Fanglagers auf. Die Buchse kann die Platte durchgreifen oder auf der Platte angebracht sein. Die Platte ist zweckmäßigerweise mit mehreren Durchbrüchen zum Durchführen von Befestigungsbolzen versehen. Die Aufnahmeeinrichtung kann einstückig aus Metall hergestellt sein.

Der Aufnahmeabschnitt weist vorteilhafterweise Langlöcher zum Justieren und Befestigen der Platte auf. Die Langlöcher korrespondieren zu den in der Platte vorgesehenen Durchbrüchen, so dass die Platte am Aufnahmeabschnitt, beispielsweise mittels Bolzen, befestigt werden kann. Dabei ist es möglich, die Platte relativ zum Aufnahmeabschnitt mittels der Bolzen innerhalb der Langlöcher zu verschieben, so dass sie relativ zum Aufnahmeabschnitt justiert und in der justierten Position befestigt werden kann.

Vorteilhafterweise ist der Aufnahmeabschnitt mit einem gegen den Boden abstützbaren Stützabschnitt verbunden. Der Stützabschnitt hat die Funktion, den Aufnahmeabschnitt in einem vorgegebenen Abstand oberhalb des Bodens zu halten. Der Abstand kann 20 bis 50 cm, vorzugsweise 30 bis 40 cm, betragen. Das Vorsehen des Stützabschnitts erleichtert das seitliche Einführen des Wellenabschnitts sowie die Montage der Aufnahmeeinrichtung am Aufnahmeabschnitt.

Nach einer weiteren vorteilhaften Ausgestaltung sind der Aufnahmeabschnitt und der Stützabschnitt einstückig aus einer Metallplatte hergestellt. Sie können insbesondere durch das Vorsehen von Durchbrüchen und das Biegen der Metallplatte einfach und kostengünstig hergestellt werden.

Bei dem Rührwerkzeug kann es sich vorteilhafterweise um einen Hyperboloid-Rührkörper handeln. Damit kann auf besonders effiziente Weise eine Strömung im Abwasser oder dgl. erzeugt werden.

Das vorgeschlagene Vertikalrührwerk lässt sich einfach und schnell montieren. Dabei kann ein Verfahren mit folgenden Schritten ausgeführt werden:
Montage des Antriebs und der Antriebswelle, so dass die Antriebswelle oberhalb des Beckenbodens hängt,
Verankern der Haltevorrichtung im Beckenboden, so dass sich die Ausnehmung unterhalb der Antriebswelle befindet,
Anordnen des Rührwerkzeugs am Ende der Antriebswelle, wobei der Wellenabschnitt seitlich in die Ausnehmung des Aufnahmeabschnitts eingeführt wird,
Montage des Rührwerkzeugs am Ende der Antriebswelle, und
Montage der Aufnahmeeinrichtung am Aufnahmeabschnitt, so dass das freie Ende des Wellenabschnitts im Fanglager aufgenommen wird.

Das vorgeschlagene Verfahren erfordert nicht mehr ein mehrmaliges Befestigen des Antriebs. Die Vorrichtung kann schnell montiert und dabei gleichzeitig exakt justiert werden.

Nach einer vorteilhaften Ausgestaltung wird die Haltevorrichtung nach ihrer endgültigen Verankerung im Beckenboden zumindest abschnittsweise in Beton eingegossen. Das erhöht die Haltbarkeit und die Festigkeit der Haltevorrichtung.

Nachfolgend wird ein Ausführungsbeispiel der Erfindung anhand der Zeichnung näher erläutert. Es zeigen:
- Fig. 1: eine Seitenansicht eines Vertikalrührwerks,
- Fig. 2: eine vergrößerte Detailansicht des Hyperboloid-Rührkörpers gemäß Fig. 1,
- Fig. 3: eine Seitenansicht der Haltevorrichtung und
- Fig. 4: eine perspektivische Ansicht der Haltevorrichtung gemäß Fig. 3.

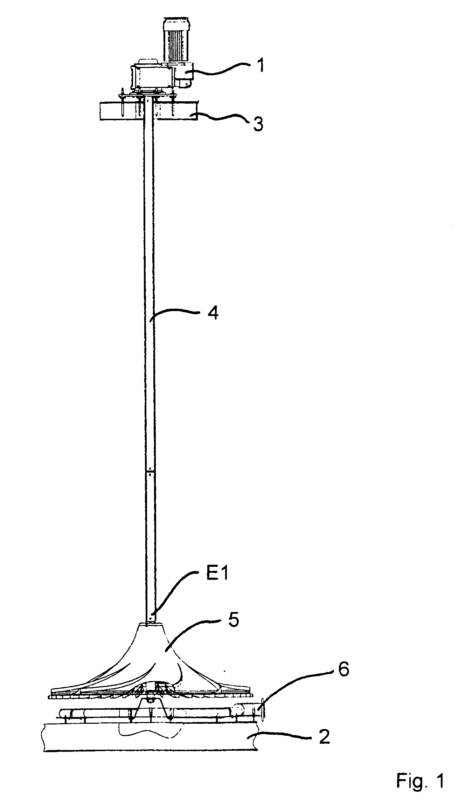

Bei dem in Fig. 1 gezeigten Vertikalrührwerk ist ein Antrieb 1 oberhalb eines Beckenbodens 2 z. B. an einer das Becken (hier nicht im Einzelnen gezeigt) überspannenden Brücke 3 befestigt. Der Beckenboden 2 verläuft in horizontaler Richtung. Vom Antrieb 1 erstreckt sich in vertikaler Richtung eine Antriebswelle 4, an deren Ende E1 ein Hyperboloid-Rührkörper 5 angebracht ist. Zwischen dem Beckenboden 2 und dem Hyperboloid-Rührkörper 5 ist eine Ringleitung 6 zum Zuführen von Luft in einen Bereich unterhalb des Hyperboloid-Rührkörpers 5 vorgesehen.

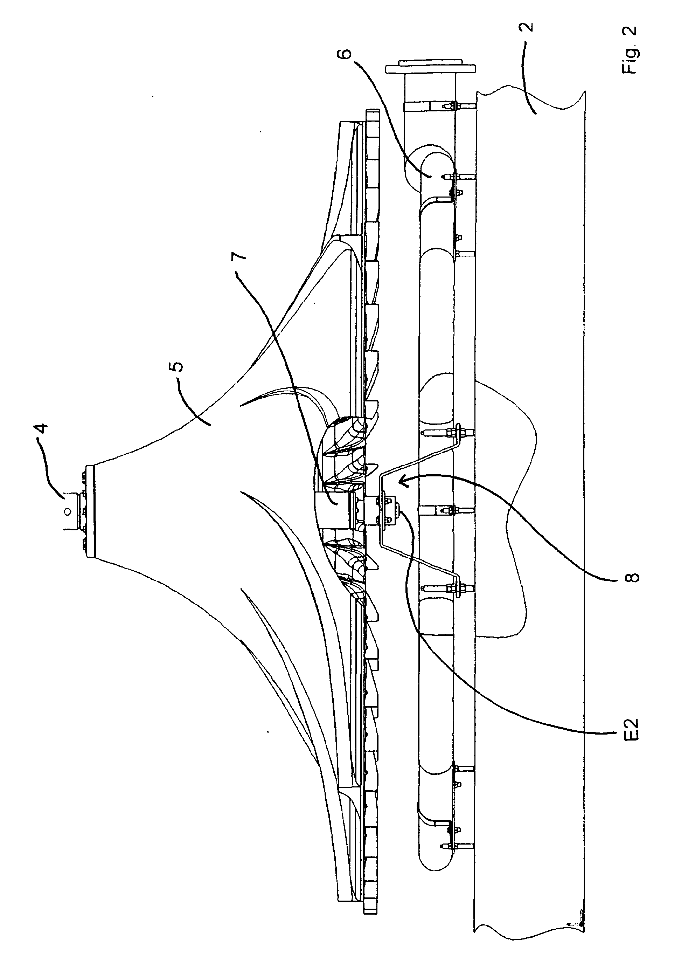

Wie insbesondere aus Fig. 2 ersichtlich ist, erstreckt sich von einer Unterseite des Hyperboloid-Rührkörpers 5 ein Wellenabschnitt 7 in Richtung des Beckenbodens 2. Ein freies Ende E2 des Wellenabschnitts 7 ist in einer allgemein mit dem Bezugszeichen 8 bezeichneten Haltevorrichtung gehalten.

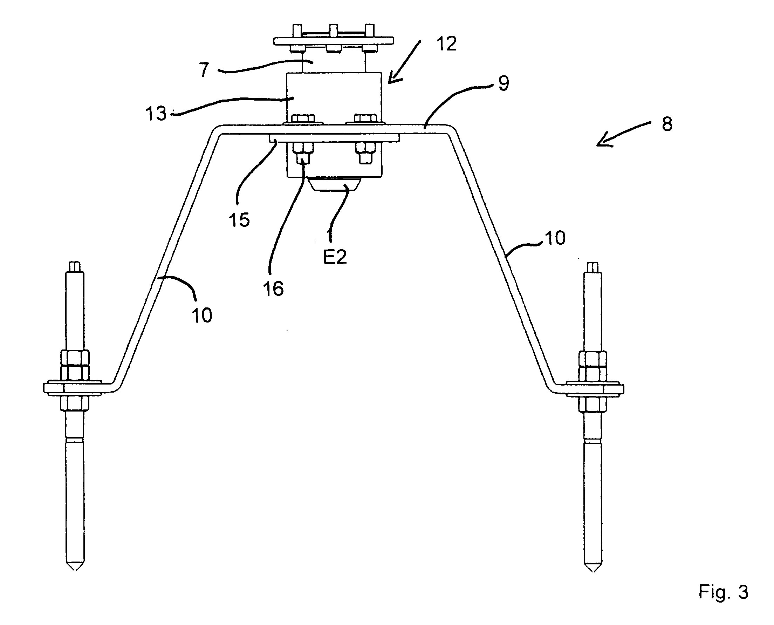

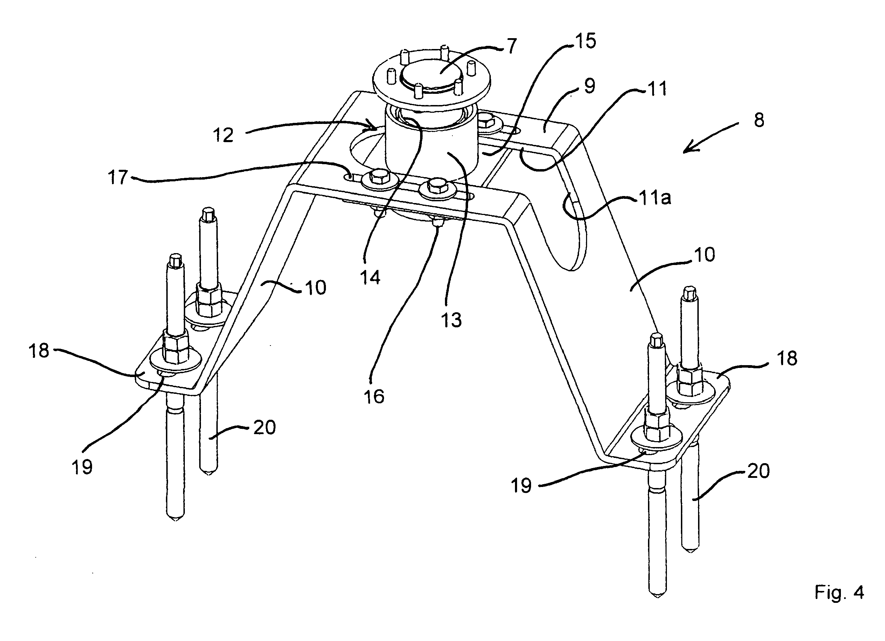

Fig. 3 und 4 zeigen die Haltevorrichtung 8 im Detail. Sie weist einen im Wesentlichen horizontal verlaufenden Aufnahmeabschnitt 9 sowie zwei vom Aufnahmeabschnitt 9 sich unter einem Winkel von 60-80° schräg in Richtung des Beckenbodens 2 erstreckende Stützabschnitte 10 auf. Die Aufnahmeeinrichtung 9 weist eine Ausnehmung 11 auf, durch welche das freie Ende E2 des Wellenabschnitts 7 seitlich eingeführt werden kann. Die Ausnehmung 11 setzt sich vorteilhafterweise als weitere Ausnehmung 11a in einem der beiden Stützabschnitte 10 fort.

Mit dem Bezugszeichen 12 ist eine Aufnahmeeinrichtung bezeichnet, welche eine Buchse 13 zur Aufnahme eines Fanglagers 14 aufweist. Die Buchse 13 durchgreift eine Platte 15, welche, vorzugsweise mittels Bolzen 16, an dem Aufnahmeabschnitt 9 lösbar befestigt ist. Die Bolzen 16 sind durch im Aufnahmeabschnitt 9 vorgesehene Langlöcher 17 sowie durch (hier nicht sichtbare) Durchbrüche in der Platte 15 geführt.

Jeder der Stützabschnitte 10 weist endständig einen abgewinkelten Abschnitt 18 auf, der im Wesentlichen horizontal verläuft und mit jeweils zwei weiteren Langlöchern 19 versehen ist. Durch die weiteren Langlöcher 19 sind Ankerbolzen 20 geführt, welche eine Befestigung der Halteeinrichtung 8 im Beckenboden 2 ermöglichen. Die Ankerbolzen 20 sind dabei so ausgestaltet, dass die Halteeinrichtung 8 in ihrer Höhe sowie in einer Richtung senkrecht zu den Langlöchern 17 justiert werden kann.

Die Montage des erfindungsgemäßen Vertikalrührwerks wird folgendermaßen ausgeführt:
Zunächst wird die Antriebswelle 4 am Antrieb 1 montiert. Sodann wird der Antrieb 1 so an der Brücke 3 oder dgl. montiert, dass die Antriebswelle 4 sich hängend in Richtung des Beckenbodens 2 erstreckt. Es wird daraufhin das Lot unterhalb der hängenden Antriebswelle 4 auf den Beckenboden 2 gefällt. Anschließend wird die Haltevorrichtung 8 mit den Ankerbolzen 20 so im Beckenboden 2 fixiert, dass sich das gefällte Lot innerhalb der Ausnehmung 11 befindet.

Im Anschluss daran wird der Hyperboloid-Rührkörper 5 beispielsweise mittels eines Gabelstaplers in den Bereich unterhalb des Endes E1 der Antriebswelle 4 verfahren. Dabei wird gleichzeitig das freie Ende E2 des Wellenabschnitts 7 seitlich in die Ausnehmung 11 sowie die weitere Ausnehmung 11a der Halteeinrichtung 8 eingeführt. Es wird nun der Hyperboloid-Rührkörper 5 am Ende E1 der Antriebswelle 4 befestigt.

Im Anschluss daran wird die Aufnahmeeinrichtung 12 von unten über das freie Ende E2 geschoben. Die Platte 15 wird mittels der Bolzen 16 am Aufnahmeabschnitt 9 justiert und fixiert. Schließlich werden die Befestigungsanker 20 an den abgewinkelten Abschnitten 18 justiert und fixiert. Insbesondere die abgewinkelten Abschnitte 18 sowie Abschnitte der Stützabschnitte 10 können dann mit Beton vergossen werden. Damit ist die Montage des Vertikalrührwerks abgeschlossen. Es kann im Anschluss daran nun noch die Ringleitung 6 am Beckenboden 2 montiert werden.

**Bezugszeichenliste**

| | |
|---|---|
| 1 | Antrieb |
| 2 | Beckenboden |
| 3 | Brücke |
| 4 | Antriebswelle |
| 5 | Hyperboloid-Rührkörper |
| 6 | Ringleitung |
| 7 | Wellenabschnitt |
| 8 | Haltevorrichtung |
| 9 | Aufnahmeabschnitt |
| 10 | Stützabschnitt |
| 11 | Ausnehmung |
| 11a | weitere Ausnehmung |
| 12 | Aufnahmeeinrichtung |
| 13 | Buchse |
| 14 | Fanglager |
| 15 | Platte |
| 16 | Bolzen |
| 17 | Langloch |
| 18 | abgewinkelter Abschnitt |
| 19 | weiteres Langloch |
| 20 | Ankerbolzen |
| | |
| E1 | Ende |
| E2 | freies Ende |

## Patentansprüche

1. Anordnung aus Klärbecken und Vertikalrührwerk,
bei dem an einer von einem oberhalb eines Beckenbodens (2) angebrachten Antrieb (1) vertikal sich ersteckenden Antriebswelle (4) ein Rührwerkzeug (5) angebracht ist,
wobei ein freies Ende (E2) eines vom Rührwerkzeug (5) in Richtung des Beckenbodens (2) sich ersteckenden Wellenabschnitts (7) in einem Fanglager (14) gehalten ist,
wobei das Fanglager (14) in einer am Beckenboden (2) abgestützten Haltevorrichtung (8) gehalten ist,
wobei die Haltevorrichtung (8) einen Aufnahmeabschnitt (9) für eine das Fanglager (14) aufnehmende Aufnahmeeinrichtung (12) aufweist,
**dadurch gekennzeichnet, dass**
der Aufnahmeabschnitt (9) eine sich in eine im Wesentlichen horizontale Richtung öffnende Ausnehmung (11) zum seitlichen Einführen des Wellenabschnitts (7) aufweist.

2. Anordnung nach Anspruch 1, wobei die Aufnahmeeinrichtung (12) eine an einer Platte (15) angebrachte Buchse (13) zur Aufnahme des Fanglagers (14) aufweist.

3. Anordnung nach einem der vorhergehenden Ansprüche, wobei der Aufnahmeabschnitt (9) Langlöcher (17) zum Justieren der Platte (15) aufweist.

4. Anordnung nach einem der vorhergehenden Ansprüche, wobei der Aufnahmeabschnitt (9) mit einem gegen den Beckenboden (2) abstützbaren Stützabschnitt (10) verbunden ist.

5. Anordnung nach einem der vorhergehenden Ansprüche, wobei der Aufnahmeabschnitt (9) und der Stützabschnitt (10) einstückig aus einer Metallplatte hergestellt sind.

6. Anordnung nach einem der vorhergehenden Ansprüche, wobei das Rührwerkzeug (5) ein Hyperboloid-Rührkörper ist.

7. Verfahren zur Montage einer Anordnung nach einem der vorhergehenden Ansprüche mit folgenden Schritten:
Montage des Antriebs (1) und der Antriebswelle (4), so dass die Antriebswelle (4) oberhalb des Beckenbodens (2) hängt,
Verankern der Haltevorrichtung (8) im Beckenboden (2), so dass sich die Ausnehmung (11) unterhalb der Antriebswelle (4) befindet,
Anordnen des Rührwerkzeugs (5) am Ende (E1) der Antriebswelle (4), wobei der Wellenabschnitt (7) seitlich in die Ausnehmung (11) des Aufnahmeabschnitts (9) eingeführt wird,
Montage des Rührwerkzeugs (5) am Ende (E1) der Antriebswelle (4), und
Montage der Aufnahmeeinrichtung (12) am Aufnahmeabschnitt (9), so dass das freie Ende (E2) des Wellenabschnitts (7) im Fanglager (14) aufgenommen wird.

8. Verfahren nach Anspruch 7, wobei die Haltevorrichtung (8) zumindest abschnittsweise in Beton eingegossen wird.

## Claims

1. Arrangement of a sedimentation tank and a vertical agitator,
in which an agitator tool (5) is attached to a drive shaft (4) that extends vertically from a drive (1) attached above a tank floor (2),
wherein an unattached end (E2) of a shaft section (7) that extends from the agitator tool (5) in the direction of the tank floor (2) is held in a safety bearing (14),
wherein the safety bearing (14) is held in a retaining device (8) supported on the tank floor (2),
wherein the retaining device (8) has a receiving section (9) for a receiving device (12) that receives the safety bearing (14),
**characterized in that**
the receiving section (9) has a recess (11) that opens in a substantially horizontal direction for the lateral insertion of the shaft section (7).

2. The arrangement according to claim 1, wherein the receiving device (12) has a sleeve (13) attached to a plate (15) for receiving the safety bearing (14).

3. The arrangement according to any one of the preceding claims, wherein the receiving section (9) has elongated holes (17) for aligning the plate (15).

4. The arrangement according to any one of the preceding claims, wherein the receiving section (9) is connected to a support section (10) adapted to be supported against the tank floor (2).

5. The arrangement according to any one of the preceding claims, wherein the receiving section (9) and the support section (10) are produced as an integral piece from a metal plate.

6. The arrangement according to any one of the preceding claims, wherein the agitator tool (5) is a hyperboloid agitator body.

7. A method for assembling of an arrangement according to any one of the preceding claims, comprising the following steps:
mounting the drive (1) and the drive shaft (4) such that the drive shaft (4) is suspended above the tank floor (2),
anchoring the retaining device (8) in the tank floor (2) such that the recess (11) is located below the drive shaft (4),
arranging the agitator tool (5) at the end (E1) of the drive shaft (4), wherein the shaft section (7) is inserted laterally into the recess (11) of the receiving section (9),
mounting the agitator tool (5) at the end (E1) of the drive shaft (4), and
mounting the receiving device (12) on the receiving section (9) such that the unattached end (E2) of the shaft section (7) is received in the safety bearing (14).

8. The method according to claim 7, wherein at least sections of the retaining device (8) are cast in concrete.

## Revendications

1. Disposition comprenant un bassin de décantation et un agitateur vertical,
sur lequel au niveau d'un arbre d'entraînement (4) s'étendant verticalement par rapport à un entraînement (1) monté au-dessus d'un fond de bassin (2) est monté un outil d'agitation (5),
où une extrémité libre (E2) d'un segment d'arbre (7) s'étendant de l'outil d'agitation (5) vers le fond de bassin (2) est maintenue dans un palier d'équilibrage (14),
où le palier d'équilibrage (14) est maintenu dans un dispositif de retenue (8) appuyé sur le fond de bassin (2),
où le dispositif de retenue (8) présente un segment récepteur (9) pour un dispositif récepteur (12) recevant le palier d'équilibrage (14),
**caractérisée en ce que**
le segment récepteur (9) présente un évidement (11) s'ouvrant essentiellement dans le sens horizontal pour l'introduction latérale du segment d'arbre (7).

2. Disposition selon la revendication 1, où le dispositif récepteur (12) présente un coussinet (13) monté sur une plaque (15) pour le logement du palier d'équilibrage (14).

3. Disposition selon l'une des revendications précédentes, où le segment récepteur (9) présente des trous oblongs (17) pour l'ajustage de la plaque (15).

4. Disposition selon l'une des revendications précédentes, où le segment récepteur (9) est relié à un segment support (10) pouvant être appuyé contre le fond de bassin (2).

5. Disposition selon l'une des revendications précédentes, où le segment récepteur (9) et le segment support (10) sont réalisés en une pièce à partir d'une plaque métallique.

6. Disposition selon l'une des revendications précédentes, où l'outil d'agitation (5) est un corps d'agitation hyperboloïde.

7. Procédé de montage d'une disposition selon l'une des revendications précédentes suivant les étapes suivantes:
montage de l'entraînement (1) et de l'arbre d'entraînement (4) de façon à ce que l'arbre d'entraînement (4) soit suspendu au-dessus du fond de bassin (2),
ancrage du dispositif de retenue (8) dans le fond de bassin (2) de façon à ce que l'évidement (11) soit en dessous de l'arbre d'entraînement (4),
disposition de l'outil d'agitation (5) à l'extrémité (E1) de l'arbre d'entraînement (4), où le segment d'arbre (7) est introduit latéralement dans l'évidement (11) du segment récepteur (9),
montage de l'outil d'agitation (5) sur l'extrémité (E1) de l'arbre d'entraînement (4), et
montage du dispositif récepteur (12) sur le segment récepteur (9) de façon à ce que l'extrémité libre (E2) du segment d'arbre (7) soit logée dans le palier d'équilibrage (14).

8. Procédé selon la revendication 7, où le dispositif de retenue (8) est scellé tout au moins partiellement dans du béton.
